# EUROPEAN PATENT SPECIFICATION

(11) **EP 3 954 251 B1**
(45) Date of publication and mention of the grant of the patent: **05.06.2024**
(21) Application number: 20848831.2
(22) Date of filing: 09.12.2020
(51) Int. Cl.: A47B 88/40, A47B 67/04, F16C 29/04

(54) **STEEL BALL CONCEALABLE THREE-SECTION SLIDE RAIL STRUCTURE AND CABINET COMPRISING THE SAME**
VERBERGBARE STAHLKUGELGLEITSCHIENENSTRUKTUR MIT DREI ABSCHNITTEN UND SCHRANK DAMIT
STRUCTURE DE RAIL COULISSANT À TROIS SECTIONS DISSIMULÉE À BILLE D'ACIER ET ARMOIRE

(30) Priority: 03.07.2020 CN 202010638729
(43) Date of publication of application: 16.02.2022
(73) Proprietor: Dongguan Dige Hardware Products Co., Ltd., Wangniudun Town Dongguan Guangdong 523218 (CN)
(72) Inventor: HE, Quanfang, Dongguan, Guangdong 523218 (CN)
(74) Representative: Meyer, Thorsten
(86) International application number: PCT/CN2020/134735
(87) International publication number: WO 2022/001003

(56) References cited:
- EP-A1- 2 481 990
- CN-A- 101 449 885
- CN-A- 102 170 809
- CN-A- 111 772 374
- CN-U- 208 941 351
- CN-U- 210 643 257
- DE-A1-102008 046 978
- DE-A1-102011 118 896
- DE-A1-102012 100 454
- DE-U1-202007 000 576
- US-A- 2 675 277
- US-B1- 6 390 575

## Description

### TECHNICAL FIELD

The present invention relates to the field of furniture, and in particular to a steel ball concealable three-section slide rail structure and a cabinet comprising the same.

### BACKGROUND

Slide rails, also known as guide rails or slide ways, refer to hardware interconnecting parts that are fixed to a cabinet body of furniture and are used for drawers of the furniture or cabinet boards moving in or out. The slide rails are suitable for connection of wooden and steel drawers and cabinets, furniture, filing cabinets, bathroom cabinets, and the like.

At present, in the installation of a drawer, slide rails are mostly used in order to facilitate sliding of the drawer. With the improvement of people's living standards, more and more items need to be stored, and therefore the storage space of the drawer needs to be increased. The existing drawer usually adopts roller type slide rails, and rollers must have a certain height in order to ensure smoothness of sliding. Because the rollers are located at the bottom of the drawer, the drawer is raised and the installation space for the drawer is reduced, which results in a smaller drawer size that cannot meet higher storage requirements. Such slide rail structures are described in EP 2 481 990 A1, DE 10 2008 046978 A1, DE 10 2011 118896 A1, US 2 675 277 A, DE 20 2007 000576 U1 and DE 10 2012 100454 A1. For this purpose, a steel ball concealable three-section slide rail structure is provided to overcome the above problem.

### SUMMARY

An objective of the present invention is to provide a steel ball concealable three-section slide rail structure and a cabinet comprising the same, the steel ball concealable three-section slide rail structure is stable in sliding and beautiful in appearance, and takes up less space, which improves the space utilization rate.

In order to achieve the aforementioned objective, a steel ball concealable three-section slide rail structure is provided in the present invention, which comprises a top rail, a middle rail, a bottom rail and rolling members; the top rail and the middle rail are connected slidably and rolling members are provided between the top rail and the middle rail, and the middle rail and the bottom rail are connected slidably and rolling members are provided between the middle rail and the bottom rail; the top rail is provided with a first insertion opening, the bottom rail is provided with a second insertion opening, and the first insertion opening and the second insertion opening are arranged opposite to each other; the middle rail comprises a first insertion portion, a transition portion and a second insertion portion connected in sequence; the first insertion portion is inserted into the first insertion opening to connect slidably with the top rail, the second insertion portion is inserted into the second insertion opening to connect slidably with the bottom rail; between the first insertion portion and the top rail and between the second insertion portion and the bottom rail are each provided at least three groups of rolling members, and the at least three groups of rolling members are arranged in an isosceles triangle viewed from a cross-section direction of the middle rail.

According to the invention, a top surface of the top rail is a mounting surface which is substantially parallel to a flat surface; the first insertion portion and the second insertion portion have the same structure and each comprise a first positioning plate, a second positioning plate, and a third positioning plate that are connected in sequence; the second positioning plate is substantially parallel to the mounting surface; the middle rail comprises a sliding cavity; the first positioning plate and the third positioning plate are both inclined toward the sliding cavity; the first positioning plate, the second positioning plate and the third positioning plate define a first mounting groove for mounting the rolling members, a second mounting groove for mounting the rolling members is defined on an outer side of the first positioning plate, and a third mounting groove for mounting the rolling members is defined on an outer side of the third positioning plate; a first accommodating cavity is defined in the top rail, a second accommodating cavity is defined in the bottom rail, and the first accommodating cavity and the second accommodating cavity each have a fourth mounting groove, a fifth mounting groove, and a sixth mounting groove that are respectively matched with the first mounting groove, the second mounting groove and the third mounting groove.

In a preferred embodiment, the steel ball concealed three-section slide rail structure further comprises ball supports slidably disposed in the first accommodating cavity and the second accommodating cavity, the ball support is provided an opening for inserting the middle rail, an edge of the ball support is provided with a plurality of installing grooves for installing the rolling members along an extension direction of the ball support, and the rolling elements are rotatably installed in the installing grooves.

According to the invention, the top rail is provided with a positioning assembly which comprises a first positioning member located at a front end of the top rail and a second positioning member located at a rear end of the top rail; the first positioning member comprises a first connecting portion connected to the top rail and substantially perpendicular to the mounting surface of the top rail; an end of the first connecting portion is provided with a second connecting portion which is substantially perpendicular to the first connecting portion and extends toward an inner side of the top rail; an end of the second connecting portion is provided with a first insertion positioning portion which is perpendicular to the second connecting portion and extends upward; and a top end of the first insertion positioning portion is provided with a first positioning portion which forms a first angle α with the first insertion positioning portion, where 90° < α < 180°.

According to the invention, the second positioning member comprises a third connecting portion substantially perpendicular to a top end of the top rail, a top end of the third connecting portion is provided with a second insertion positioning portion along an extension direction of the top rail; an end of the second insertion positioning portion is provided with a second positioning portion which is disposed along the extension direction of the top rail; and the second positioning portion and the second insertion positioning portion form a second angle β, where 90° < β < 180°.

In a preferred embodiment, the front end of the top rail is further provided with a limiting member, and a top surface of the limiting member is substantially flush with the mounting surface.

In a preferred embodiment, the limiting member comprises a baffle, a clamping portion adapted to the first accommodating cavity is provided on a rear side of the baffle, and the clamping portion is inserted into the first accommodating cavity of the top rail from the front end of the top rail to realize connection between the limiting member and the top rail.

In a preferred embodiment, an outer side of the bottom rail is provided with a connecting member in a bent shape, the connecting member comprises a first mounting portion and a second mounting portion connected in the bent shape; one side of the first mounting portion is connected to the outer side of the bottom rail, and the second mounting portion is provided with a plurality of connecting holes.

In a preferred embodiment, a first limiting protrusion and a second limiting protrusion protruding toward the first accommodating cavity are at intervals provided in the first accommodating cavity of the top rail, and a third limiting protrusion and a fourth limiting protrusion protruding toward the second accommodating cavity are at intervals provided in the second accommodating cavity of the bottom rail; a top of the middle rail is at intervals provided with a fifth limiting protrusion and a sixth limiting protrusion, and a bottom of the middle rail is at intervals provided with a seventh limiting protrusion and an eighth limiting protrusion; and the fifth limiting protrusion, the sixth limiting protrusion, the seventh limiting protrusion and the eighth limiting protrusion all protrude away from the sliding cavity and extend from the middle rail.

Another objective of the present invention is to provide a cabinet which comprises:
one or more steel ball concealable three-section slide rail structures described above;
a cabinet body, installed with the one or more steel ball concealable three-section slide rail structures;
one or more drawers installed on the one or more steel ball concealed three-section slide rail structures, the drawer being provided with an opening groove for storing items.

The steel ball concealable three-section slide rail structure provided in the present invention has the following advantages compared with the prior art.

In the steel ball concealable three-section slide rail structure, the top rail, the middle rail and the bottom rail are configured to connect slidably, so that the top rail and the middle rail slide relative to each other, and the middle rail and the bottom rail slide relative to each other, which can meet the requirements of drawing out and pushing in a drawer. The top rail is provided with a first insertion opening, and the bottom rail is provided with a second insertion opening, and the first insertion opening and the second insertion opening are arranged opposite to each other; the middle rail comprises a first insertion portion, a transition portion and a second insertion portion connected in sequence; the first insertion portion is inserted into the first insertion opening to connect slidably with the top rail, the second insertion portion is inserted into the second insertion opening to connect slidably with the bottom rail; the first insertion portion and the second insertion portion are respectively inserted in the top rail and the bottom rail, so that a height of the entire slide rail structure is reduced, which reduces a space under a drawer occupied by the steel ball concealable three-section slide rail structure when the drawer is installed, thereby increasing the available space of the drawer and improving space utilization rate. In this way, the drawer can store more items. Furthermore, between the first insertion portion and the top rail and between the second insertion portion and the bottom rail are each provided at least three groups of rolling members which are arranged in an isosceles triangle viewed from a cross-section direction of the middle rail. The three groups of rolling members are arranged in an isosceles triangle, so that the steel ball concealable three-section slide rail structure can be stressed evenly and the sliding stability of the drawer can be improved.

### BRIEF DESCRIPTION OF DRAWINGS

FIG. 1 is a schematic structural view of a cabinet from one perspective according to an embodiment of the present invention;
FIG. 2 is a schematic structural view of a steel ball concealable three-section slide rail structure according to an embodiment of the present invention in a contracted state;
FIG. 3 is an explosive view of a steel ball concealable three-section slide rail structure according to an embodiment of the present invention;
FIG. 4 is a cross-sectional view of a steel ball concealable three-section slide rail structure according to an embodiment of the present invention;
FIG. 5 is a cross-sectional view of another steel ball concealable three-section slide rail structure according to an embodiment of the present invention;
FIG. 6 is a schematic structural view of a top rail according to an embodiment of the present invention;
FIG. 7 is a cross-sectional view of a top rail according to an embodiment of the present invention;
FIG. 8 is a schematic structural diagram of a first positioning member according to an embodiment of the present invention;
FIG. 9 is a schematic structural diagram of a second positioning member according to an embodiment of the present invention;
FIG. 10 is a schematic structural view of a middle rail according to an embodiment of the present invention;
FIG. 11 is a cross-sectional view of a middle rail according to an embodiment of the present invention;
FIG. 12 is a schematic structural view of a bottom rail according to an embodiment of the present invention;
FIG. 13 is a cross-sectional view of a bottom rail according to an embodiment of the present invention;
FIG. 14 is a schematic structural view of a ball support according to an embodiment of the present invention;
FIG. 15 is a schematic view of an installed first positioning member according to an embodiment of the present invention; and
FIG. 16 is an enlarged view of Part A in FIG. 15.

List of reference numerals: 1, cabinet body; 2, drawer; 21, side plate; 22, first drawer positioning hole; 3, steel ball concealed three-section slide rail structure; 4, top rail; 41, fourth top rail mounting groove; 42, fifth top rail mounting groove; 43, sixth top rail mounting groove; 44, regulating screw; 45, first limiting protrusion; 46, second limiting protrusion; 5, middle rail; 51, first positioning plate; 52, second positioning plate; 53, third positioning plate; 54, transition portion; 55, sliding cavity; 56, fifth limiting protrusion; 57, sixth limiting protrusion; 58, seventh limiting protrusion; 59, eighth limiting protrusion; 6, bottom rail; 61, fourth bottom rail mounting groove; 62, fifth bottom rail mounting groove; 63, sixth bottom rail mounting groove; 7, ball support; 71, steel ball installing groove; 8, steel ball; 9, first positioning member; 91, first connecting portion; 92, second connecting portion; 93, first insertion positioning portion; 94, first positioning portion; 10, second positioning member; 10a, positioning connecting plate; 10b, third connecting portion; 10c, second insertion positioning portion; 10d, second positioning portion; 11, limiting member; 12, connecting element; 121, second mounting portion; and 122, first mounting portion.

### DETAILED DESCRIPTION

Hereafter, embodiments of the present invention will be further described in conjunction with the drawings. The following embodiments are used to illustrate the present invention, but not to limit the scope of the present invention. Obviously, the described embodiments are only a part of the embodiments of the present invention, rather than all the embodiments. Based on the embodiments of the present invention, all other embodiments obtained by those of ordinary skill in the art without creative work shall fall within the protection scope of the present invention.

It should be understood that the terms "first", "second", etc. are used in the present invention to describe various information, but the information should not be limited to these terms. These terms are only used to distinguish the same type of information from each other. For example, without departing from the scope of the present invention, "first" information may also be referred to as "second" information, and similarly, "second" information may also be referred to as "first" information.

In the description of the present invention, it should be noted that, unless otherwise clearly specified and limited, the terms "connected" and "connecting" should be understood in a broad sense, for example, it may refer to fixed connection, detachable connection, or integral connection; it may also refer to mechanical connection or electrical connection; it may also refer to direct connection or indirect connection through an intermediate medium; and it may refer to internal communication between two elements. For those of ordinary skill in the art, the specific meanings of the above-mentioned terms in the present invention can be understood in specific situations. In addition, the orientations such as "top", "bottom", "inside", and "outside" in the present invention are all descriptions based on the orientation of a slide rail assembly installed on a cabinet.

It should be understood that the orientations or position relationships indicated by the terms "top", "lower", "left", "right", "top", "bottom", and the like, in the description of the present invention, are based on the orientations or position relationships of a steel ball concealable three-section slide rail structure installed in a cabinet.

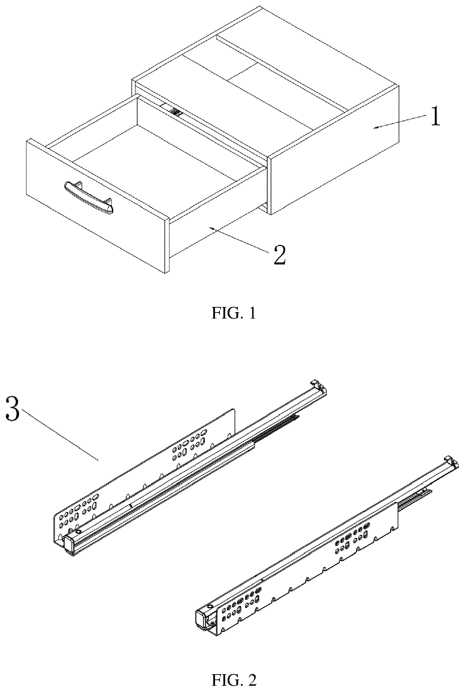

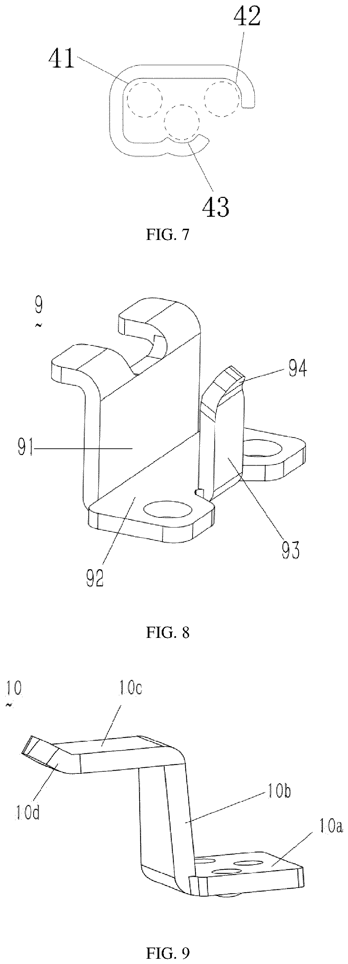

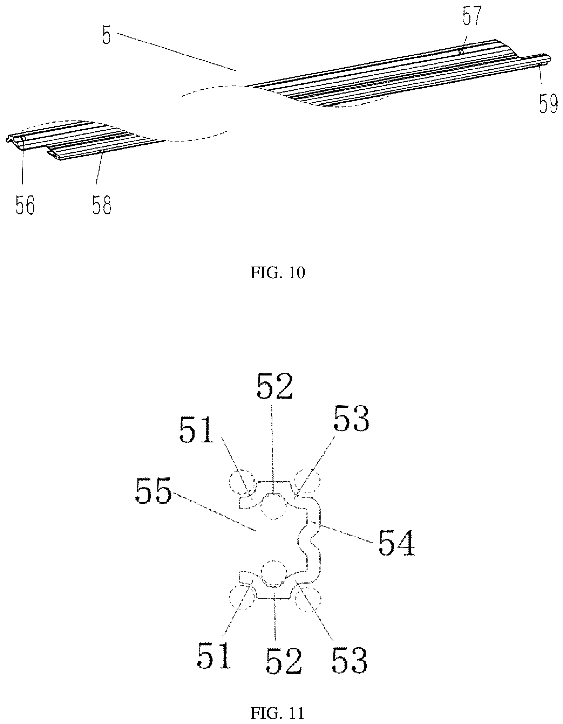

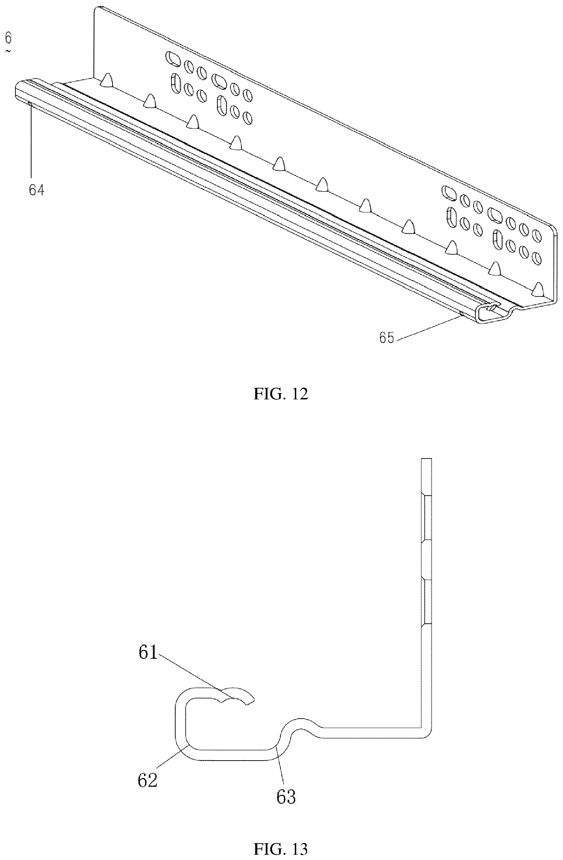

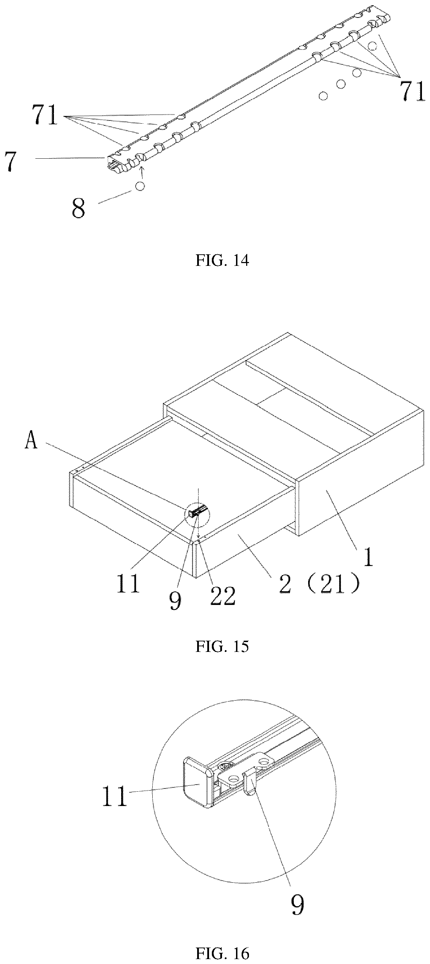

Refer to FIG. 1 to FIG. 16. A steel ball concealable three-section slide rail structure 3 according to a preferred embodiment of the present invention comprises a top rail 4, a middle rail 5, a bottom rail 6 and rolling members. The top rail 4 and the middle rail 5 are connected slidably, and the middle rail 5 and the bottom rail 6 are connected slidably. Rolling members are provided between the top rail 4 and the middle rail 5, and rolling members are provided between the middle rail 5 and the bottom rail 6. The top rail 4 is provided with a first insertion opening, the bottom rail 6 is provided with a second insertion opening, and the first insertion opening and the second insertion opening are arranged opposite to each other. The first insertion opening is on an outer lower side of the upper rail 4, and the second insertion opening is an outer upper side of the bottom rail 6. The middle rail 5 comprises a first insertion portion, a transition portion 54 and a second insertion portion connected in sequence. The first insertion portion is inserted into the first insertion opening to connect slidably with the top rail 4, and the second insertion portion is inserted into the second insertion opening to connect slidably with the bottom rail 6. Between the first insertion portion and the top rail 4 and between the second insertion portion and the bottom rail 6 are each provided at least three groups of rolling members, and the three groups of rolling members are arranged in an isosceles triangle viewed from a cross-section direction of the middle rail 5.

With the aforementioned technical solution, the top rail 4, the middle rail 5 and the bottom rail 6 are configured to connect slidably, so that the top rail 4 and the middle rail 5 slide relative to each other, and the middle rail 5 and the bottom rail 6 slide relative to each other, which can meet the requirements of drawing out and pushing in a drawer 2. The top rail 4 is provided with the first insertion opening, and the bottom rail is provided with the second insertion opening, and the first insertion opening and the second insertion opening are arranged opposite to each other; the middle rail 5 comprises the first insertion portion, the transition portion 54 and the second insertion portion connected in sequence; the first insertion portion is inserted into the first insertion opening to connect slidably with the top rail 4, the second insertion portion is inserted into the second insertion opening to connect slidably with the bottom rail 6; the first insertion portion and the second insertion portion are respectively inserted in the top rail 4 and the bottom rail 6, so that a height of the entire slide rail structure is reduced, which reduces a space under the drawer 2 occupied by the steel ball concealable three-section slide rail structure when the drawer 2 is installed, thereby increasing the available space of the drawer 2 and improving space utilization rate. In this way, the drawer 2 can store more items. Furthermore, between the first insertion portion and the top rail 4 and between the second insertion portion and the bottom rail 6 are each provided at least three groups of rolling members which are arranged in an isosceles triangle viewed from a cross-section direction of the middle rail. The rolling members are arranged in an isosceles triangle, so that the steel ball concealable three-section slide rail structure can be stressed evenly and the sliding stability of the drawer 2 can be improved.

Further, a top surface of the top rail 4 is a mounting surface which is substantially parallel to a horizontal plane, which facilitates the sliding of the drawer 2. The first insertion portion and the second insertion portion have the same structure and each comprise a first positioning plate 51, a second positioning plate 52, and a third positioning plate 53 that are connected in sequence, and the second positioning plate 52 is substantially parallel to the mounting surface, which facilitates the sliding of the drawer 2. The middle rail 5 comprises a sliding cavity 55, the first positioning plate 51 and the third positioning plate 53 are both inclined toward the sliding cavity 55. The first positioning plate 51, the second positioning plate 52 and the third positioning plate 53 define a first mounting groove for installing the rolling members. A second mounting groove for installing the rolling members is defined on an outer side of the first positioning plate 51, and a third mounting groove for installing the rolling members is defined on an outer side of the third positioning plate 53. A first accommodating cavity is defined in the top rail 4, and a second accommodating cavity is defined in the bottom rail 6. A fourth top rail mounting groove 41, a fifth top rail mounting groove 42, and a sixth top rail mounting groove 43 that are respectively matched with the first mounting groove, the second mounting groove and the third mounting groove are provided in the first accommodating cavity. A fourth bottom rail mounting groove 61, a fifth bottom rail mounting groove 62, and a sixth bottom rail mounting groove 63 that are respectively matched with the first mounting groove, the second mounting groove and the third mounting groove are provided in the second accommodating cavity.

Preferably, ball supports 7 slidably disposed in the first accommodating cavity and the second accommodating cavity are further comprised. The ball support 7 is provided an opening for inserting the middle rail 5, an edge of the ball support 7 is provided with a plurality of installing grooves along an extension direction of the ball support 7 for installing the rolling members, and the rolling elements are rotatably installed in the installing grooves, which facilitates installation of the rolling members and ensures that the rolling members can be matched simultaneously when the sliding rail is sliding, thereby achieving a better sliding effect and ensuring smooth sliding of the drawer. In this embodiment, the rolling member is a steel ball 8, and the installing groove for the rolling member is a steel ball installing groove 71. Alternatively, the rolling member may be a steel column or other rolling members.

According to the invention, the top rail 4 is provided with a positioning assembly which comprises a first positioning member 9 located at a front end of the top rail 4 and a second positioning member 10 located at a rear end of the top rail 4, which facilitates installation and positioning of the drawer 2. The first positioning member 9 comprises a first connecting portion 91 connected to the top rail 4 and substantially perpendicular to the mounting surface of the top rail 4. An end of the first connecting portion 91 is provided with a second connecting portion 92 which is substantially perpendicular to the first connecting portion 91 and extends toward an inner side of the top rail 4. An end of the second connecting portion 92 is provided with a first insertion positioning portion 93 which is perpendicular to the second connecting portion 92 and extends upward. A top end of the first insertion positioning portion 93 is provided with a first positioning portion 94 which forms a first angle α with the first insertion positioning portion 93, where 90° < α < 180°. In this way, when the first insertion positioning portion 93 and the first positioning portion 94 are inserted into a corresponding socket of the drawer 2, the drawer 2 can be better positioned to ensure that the drawer 2 can move with the sliding rail. In addition, an arc-shaped connecting portion is provided on a side of the first connecting portion 91 connected with the upper rail 4, and the arc-shaped connecting portion is adapted to the first accommodating cavity, which facilitates connection between the first positioning member 9 and the upper rail 4, thereby facilitating connection between the upper rail 4 and the drawer 2. In this embodiment, a top surface of the first insertion positioning portion 93 is lower than the mounting surface, and two sides of the first insertion positioning portion 93 are provided with fixed connection holes, which further facilitates connection between the first positioning member 9 and the drawer 2.

Further, the second positioning member 10 comprises a third connecting portion 10b substantially perpendicular to a top end of the top rail 4, a top end of the third connecting portion 10b is provided with a second insertion positioning portion 10c along an extension direction of the top rail 4, and a bottom end of the third connecting portion 10b is provided with a position connecting plate 10a, which facilitates connection between the second positioning member 10 and the top rail 4. In this embodiment, an end of the second insertion positioning portion 10c is provided with a second positioning portion 10d which is disposed along the extension direction of the top rail 4; and the second positioning portion 10d and the second insertion positioning portion 10c form a second angle β, where 90° < β < 180°. In this way, when the second insertion positioning portion 10c and the second positioning portion 10d are inserted into a corresponding socket of the drawer 2, the drawer 2 can be better positioned to ensure that the drawer 2 can move with the sliding rail.

Preferably, the front end of the top rail 4 is further provided with a limiting member 11, and a top surface of the limiting member 11 is substantially flush with the mounting surface. In this way, the limiting member 11 can cover the first accommodating cavity to prevent foreign substances such as dust and debris from entering the top rail 4 and from affecting sliding of the slide rail structure, at the same time the limiting member 11 make the slide rail structure have more beautiful appearance.

Specifically, the limiting member 11 comprises a baffle, a clamping portion matched with the first accommodating cavity is provided on a rear side of the baffle, and the clamping portion is inserted into the first accommodating cavity of the top rail 4 from the front end of the top rail 4 to realize connection between the limiting member 11 and the top rail 4, thereby realizing more reliable installation of the limiting member 11 to the top rail 4.

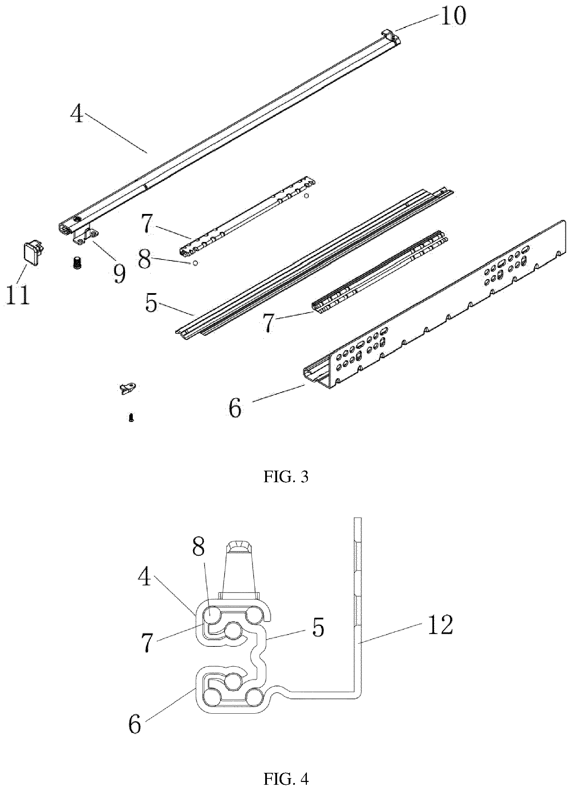

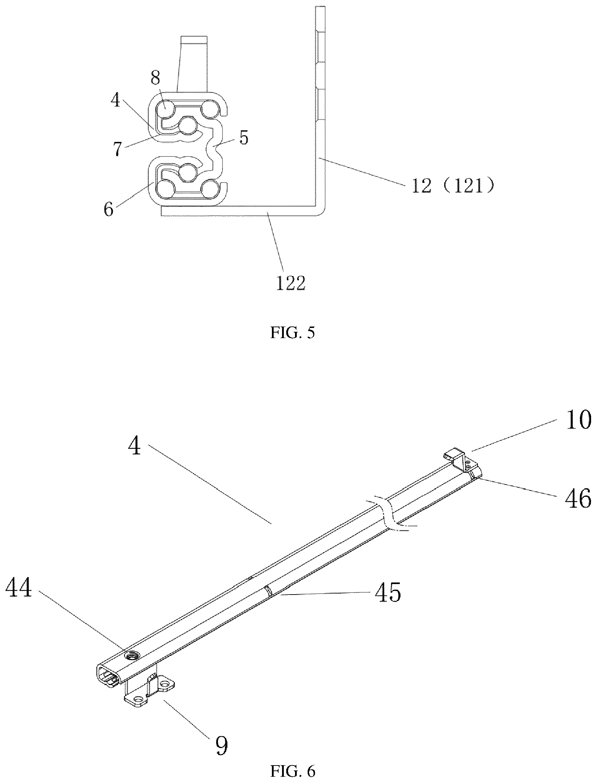

Preferably, an outer side of the bottom rail 6 is provided with a connecting member 12 in a bent shape, the connecting member 12 comprises a first mounting portion 122 and a second mounting portion 121 connected in the bent shape; one side of the first mounting portion 122 is connected to the outer side of the bottom rail 6, and the second mounting portion 121 is provided with a plurality of connecting holes, so that the weight of the slide rail structure is reduced, thereby facilitating connection between the slide rail structure and the cabinet body 1. Optionally, refer to FIGS. 4 and 5, the connecting member 12 and the bottom rail 6 can be formed integrally or in two element, depending on specific usage conditions.

Further, a first limiting protrusion 45 and a second limiting protrusion 46 protruding toward the first accommodating cavity are at intervals provided in the first accommodating cavity of the top rail 4, and a third limiting protrusion and a fourth limiting protrusion protruding toward the second accommodating cavity are at intervals provided in the second accommodating cavity of the bottom rail 6; a top of the middle rail 5 is at intervals provided with a fifth limiting protrusion 56 and a sixth limiting protrusion 57, and a bottom of the middle rail is at intervals provided with a seventh limiting protrusion 58 and an eighth limiting protrusion 59. The fifth limiting protrusion 56, the sixth limiting protrusion 57, the seventh limiting protrusion 58 and the eighth limiting protrusion 59 all protrude away from the sliding cavity 55 and extend from the middle rail 5, which is convenient to limit the position of the ball supports 7 when the slide rail structure is pulled.

In this embodiment, the middle rail 5 comprises a transition portion 54, and a middle of the transition portion is provided with a reinforcement groove recessed to the sliding cavity, which optimizes the stress state of the middle rail 5, makes the sliding of the slide rail structure more stable, reduces the height of the middle rail 5, and further improves the space utilization rate.

In addition, a regulating screw 44 is provided at the front end of the upper rail 4 to facilitate regulation of the installation position of the drawer 2.

In another aspect, a cabinet is also provided in the present invention, which comprises one or more steel ball concealable three-section slide rail structures 3 described above, a cabinet body 1, and one or more drawers 2. The cabinet body 1 is installed with the steel ball concealable three-section slide rail structure 3 and comprises two lateral plates disposed opposite to each other, and the steel ball concealable three-section slide rail structure 3 is connected to the lateral plate via the connecting member 12. The drawer 2 is installed on the steel ball concealed three-section slide rail structure 3, and the drawer 2 is provided with an opening groove for storing items. The drawer 2 comprises two side plates 21. A bottom of the side plate 21 is provided with a first drawer positioning hole 22 that matches with the first positioning member 9, and a rear of the side plate 21 is provided with a second drawer positioning hole (not shown) that matches with the second positioning member 10.

In summary, in the steel ball concealable three-section slide rail structure 3 and the cabinet, the top rail 4, the middle rail 5 and the bottom rail 6 are configured to connect slidably, so that the top rail 4 and the middle rail 5 slides relative to each other, and the middle rail 5 and the bottom rail 6 slides relative to each other, which can meet the requirements of drawing out and pushing in a drawer 2. The top rail 4 is provided with the first insertion opening, and the bottom rail 6 is provided with the second insertion opening, and the first insertion opening and the second insertion opening are arranged opposite to each other. The middle rail 5 comprises the first insertion portion, the transition portion 54 and the second insertion portion connected in sequence. The first insertion portion is inserted into the first insertion opening to connect slidably with the top rail 4, the second insertion portion is inserted into the second insertion opening to connect slidably with the bottom rail 6; and the first insertion portion and the second insertion portion are respectively inserted in the top rail 4 and the bottom rail 6, so that a height of the entire slide rail structure is reduced, which reduces a space under the drawer 2 occupied by the slide rail structure when the drawer 2 is installed, thereby increasing the available space of the drawer 2 and improving the space utilization rate. In this way, the drawer 2 can store more items. Furthermore, between the first insertion portion and the top rail 4 and between the second insertion portion and the bottom rail 6 are each provided at least three groups of rolling members which are arranged in an isosceles triangle viewed from a cross-section direction of the middle rail 5. The three groups of rolling members are arranged in an isosceles triangle, so that the steel ball concealable three-section slide rail structure can be stressed evenly and the sliding stability of the drawer 2 can be improved.

In the description of the present invention, it should be understood that the orientations or position relationships indicated by the terms "top", "lower", "left", "right", "top", "bottom", and the like, are based on based on the orientations or position relationships shown in the drawings, and are only for the convenience of describing the present invention and simplifying the description, rather than indicating or implying that the described devices or elements must have specific orientations, are constructed and operated in specific orientations. Therefore, these terms cannot be understood as a limitation of the present invention.

The invention is defined by the appended claims.

## Claims

1. A steel ball concealable three-section slide rail structure (3), wherein the steel ball concealable three-section slide rail structure (3) comprises a top rail (4), a middle rail (5), a bottom rail (6) and rolling members (8); the top rail (4) and the middle rail (5) are connected slidably and rolling members (8) are provided between the top rail (4) and the middle rail (5), and the middle rail (5) and the bottom rail (6) are connected slidably and rolling members (8) are provided between the middle rail (5) and the bottom rail (6); the top rail (4) is provided with a first insertion opening, the bottom rail (6) is provided with a second insertion opening, and the first insertion opening and the second insertion opening are arranged opposite to each other; the middle rail (5) comprises a first insertion portion, a transition portion and a second insertion portion connected in sequence; the first insertion portion is inserted into the first insertion opening to connect slidably with the top rail (4), the second insertion portion is inserted into the second insertion opening to connect slidably with the bottom rail (6); between the first insertion portion and the top rail (4) and between the second insertion portion and the bottom rail (6) are each provided at least three groups of rolling members (8), and the at least three groups of rolling members (8) are arranged in an isosceles triangle viewed from a cross-section direction of the middle rail (5); wherein a top surface of the top rail (4) is a mounting surface which is a flat surface; the first insertion portion and the second insertion portion have the same structure and each comprise a first positioning plate (51), a second positioning plate (52), and a third positioning plate (53) that are connected in sequence; and the second positioning plate (52) is substantially parallel to the mounting surface; the middle rail (5) comprises a sliding cavity (55); the first positioning plate (51) and the third positioning plate (53) are both inclined toward the sliding cavity (55); the first positioning plate (51), the second positioning plate (52) and the third positioning plate (53) define a first mounting groove for mounting the rolling members (8), a second mounting groove for mounting the rolling members (8) is defined on an outer side of the first positioning plate (51), and a third mounting groove for mounting the rolling members (8) is defined on an outer side of the third positioning plate (53); a first accommodating cavity is defined in the top rail (4), a second accommodating cavity is defined in the bottom rail (6), and the first accommodating cavity and the second accommodating cavity each have a fourth mounting groove, a fifth mounting groove, and a sixth mounting groove that are respectively matched with the first mounting groove, the second mounting groove and the third mounting groove; the top rail (4) is provided with a positioning assembly which comprises a first positioning member (9) located at a front end of the top rail (4) and a second positioning member (10) located at a rear end of the top rail (4); the first positioning member (9) comprises a first connecting portion (91) connected to the top rail (4) and substantially perpendicular to the mounting surface of the top rail (4); an end of the first connecting portion (91) is provided with a second connecting portion (92) which is substantially perpendicular to the first connecting portion (91) and extends toward an inner side of the top rail (4); an end of the second connecting portion (92) is provided with a first insertion positioning portion (93) which extends perpendicular to the second connecting portion (92); and a top end of the first insertion positioning portion (93) is provided with a first positioning portion (94) which forms a first angle α with the first insertion positioning portion (93), where 90° < α < 180°; and the second positioning member (10) comprises a third connecting portion (10b) substantially perpendicular to a top end of the top rail (4), a top end of the third connecting portion (10b) is provided with a second insertion positioning portion (10c) along an extension direction of the top rail (4); an end of the second insertion positioning portion (10c) is provided with a second positioning portion (10d) which is disposed along the extension direction of the top rail (4); and the second positioning portion (10d) and the second insertion positioning portion (10c) form a second angle β, where 90° < β < 180°.

2. The steel ball concealable three-section slide rail structure of claim 1, the steel ball concealable three-section slide rail structure further comprises ball supports slidably disposed in the first accommodating cavity and the second accommodating cavity, the ball support is provided an opening for inserting the middle rail, an edge of the ball support is provided with a plurality of installing grooves for installing the rolling members along an extension direction of the ball support, and the rolling elements are rotatably installed in the installing grooves.

3. The steel ball concealable three-section slide rail structure of claim 1, wherein the front end of the top rail is further provided with a limiting member, and a top surface of the limiting member is substantially flush with the mounting surface.

4. The steel ball concealable three-section slide rail structure of claim 3, wherein the limiting member comprises a baffle, a clamping portion adapted to the first accommodating cavity is provided on a rear side of the baffle, and the clamping portion is inserted into the first accommodating cavity of the top rail from the front end of the top rail to realize connection between the limiting member and the top rail.

5. The steel ball concealable three-section slide rail structure of claim 1, wherein an outer side of the bottom rail is provided with a connecting member in a bent shape, the connecting member comprises a first mounting portion and a second mounting portion connected in the bent shape; one side of the first mounting portion is connected to the outer side of the bottom rail, and the second mounting portion is provided with a plurality of connecting holes.

6. The steel ball concealable three-section slide rail structure of claim 1, wherein a first limiting protrusion and a second limiting protrusion protruding toward the first accommodating cavity are at intervals provided in the first accommodating cavity of the top rail, and a third limiting protrusion and a fourth limiting protrusion protruding toward the second accommodating cavity are at intervals provided in the second accommodating cavity of the bottom rail; a top of the middle rail is at intervals provided with a fifth limiting protrusion and a sixth limiting protrusion, and a bottom of the middle rail is at intervals provided with a seventh limiting protrusion and an eighth limiting protrusion; and the fifth limiting protrusion, the sixth limiting protrusion, the seventh limiting protrusion and the eighth limiting protrusion all protrude away from the sliding cavity and extend from the middle rail.

7. The steel ball concealable three-section slide rail structure of claim 1, wherein the rolling members are steel balls.

8. A cabinet, wherein the cabinet comprises:
one or more steel ball concealable three-section slide rail structures of any one of claims 1 to 7;
a cabinet body, installed with the one or more steel ball concealable three-section slide rail structures;
one or more drawers installed on the one or more steel ball concealable three-section slide rail structures, the drawer being provided with an opening groove for storing items.

## Patentansprüche

1. Verbergbare dreiteilige Stahlkugelgleitschienenstruktur (3), wobei die verbergbare dreiteilige Stahlkugelgleitschienenstruktur (3) eine obere Schiene (4), eine mittlere Schiene (5), eine untere Schiene (6) und Rollelemente (8) umfasst; die obere Schiene (4) und die mittlere Schiene (5) gleitend verbunden sind und Rollelemente (8) zwischen der oberen Schiene (4) und der mittleren Schiene (5) vorgesehen sind und die mittlere Schiene (5) und die untere Schiene (6) gleitend verbunden sind und Rollelemente (8) zwischen der mittleren Schiene (5) und der unteren Schiene (6) vorgesehen sind; die obere Schiene (4) mit einer ersten Einsetzöffnung versehen ist, die untere Schiene (6) mit einer zweiten Einsetzöffnung versehen ist und die erste Einsetzöffnung und die zweite Einsetzöffnung einander gegenüberliegend angeordnet sind; die mittlere Schiene (5) einen ersten Einsetzabschnitt, einen Übergangsabschnitt und einen zweiten Einsetzabschnitt umfasst, die in Folge verbunden sind; der erste Einsetzabschnitt in die erste Einsetzöffnung eingesetzt ist, um gleitend an die obere Schiene (4) anzubinden, der zweite Einsetzabschnitt in die zweite Einsetzöffnung eingesetzt ist, um gleitend an die untere Schiene (6) anzubinden; jeweils mindestens drei Gruppen von Rollelementen (8) zwischen dem ersten Einsetzabschnitt und der oberen Schiene (4) und zwischen dem zweiten Einsetzabschnitt und der unteren Schiene (6) vorgesehen sind und die mindestens drei Gruppen von Rollelementen (8) bei Betrachtung aus einer Querschnittsrichtung der mittleren Schiene (5) in einem gleichschenkeligen Dreieck angeordnet sind; wobei eine obere Oberfläche der oberen Schiene (4) eine Montagefläche ist, die eine flache Oberfläche ist; der erste Einsetzabschnitt und der zweite Einsetzabschnitt die gleiche Struktur aufweisen und jeweils eine erste Positionierungsplatte (51), eine zweite Positionierungsplatte (52) und eine dritte Positionierungsplatte (53) aufweisen, die in Folge verbunden sind; und die zweite Positionierungsplatte (52) im Wesentlichen parallel zur Montagefläche ist; die mittlere Schiene (5) einen Gleithohlraum (55) umfasst; die erste Positionierungsplatte (51) und die dritte Positionierungsplatte (53) beide zum Gleithohlraum (55) geneigt sind; die erste Positionierungsplatte (51), die zweite Positionierungsplatte (52) und die dritte Positionierungsplatte (53) eine erste Montagenut zum Montieren der Rollelemente (8) definieren, eine zweite Montagenut zum Montieren der Rollelemente (8) an einer Außenseite der ersten Positionierungsplatte (51) definiert ist und eine dritte Montagenut zum Montieren der Rollelemente (8) an einer Außenseite der dritten Positionierungsplatte (53) definiert ist; ein erster Aufnahmehohlraum in der oberen Schiene (4) definiert ist, ein zweiter Aufnahmehohlraum in der unteren Schiene (6) definiert ist und der erste Aufnahmehohlraum und der zweite Aufnahmehohlraum jeweils eine vierte Montagenut, eine fünfte Montagenut und eine sechste Montagenut aufweisen, die jeweils an der ersten Montagenut, der zweiten Montagenut und der dritten Montagenut angepasst sind; die obere Schiene (4) mit einer Positionierungsanordnung versehen ist, die ein erstes Positionierungselement (9), das an einem vorderen Ende der oberen Schiene (4) angeordnet ist, und ein zweites Positionierungselement (10) umfasst, das an einem hinteren Ende der oberen Schiene (4) angeordnet ist; das erste Positionierungselement (9) einen ersten Verbindungsabschnitt (91) umfasst, der mit der oberen Schiene (4) verbunden ist und wesentlich senkrecht zur Montagefläche der oberen Schiene (4) ist; ein Ende des ersten Verbindungsabschnitts (91) mit einem zweiten Verbindungsabschnitt (92) versehen ist, der wesentlich senkrecht zum ersten Verbindungsabschnitt (91) ist und zu einer Innenseite der oberen Schiene (4) hin verläuft; ein Ende des zweiten Verbindungsabschnitts (92) mit einem ersten Einsetzpositionierungsabschnitt (93) versehen ist, der senkrecht zum zweiten Verbindungsabschnitt (92) verläuft; und ein oberes Ende des ersten Einsetzpositionierungsabschnitts (93) mit einem ersten Positionierungsabschnitt (94) versehen ist, der einen ersten Winkel α mit dem ersten Einsetzpositionierungsabschnitt (93) bildet, wobei 90° < α < 180°; und das zweite Positionierungselement (10) einen dritten Verbindungsabschnitt (10b) umfasst, der wesentlich senkrecht zu einem oberen Ende der oberen Schiene (4) ist, ein oberes Ende des dritten Verbindungsabschnitts (10b) entlang einer Verlaufsrichtung der oberen Schiene (4) mit einem zweiten Einsetzpositionierungsabschnitt (10c) versehen ist; ein Ende des zweiten Einsetzpositionierungsabschnitts (10c) mit einem zweiten Positionierungsabschnitt (10d) versehen ist, der entlang der Verlaufsrichtung der oberen Schiene (4) angeordnet ist; und der zweite Positionierungsabschnitt (10d) und der zweite Einsetzpositionierungsabschnitt (10c) einen zweiten Winkel β bilden, wobei 90° < β < 180°.

2. Verbergbare dreiteilige Stahlkugelgleitschienenstruktur nach Anspruch 1, wobei die verbergbare dreiteilige Stahlkugelgleitschienenstruktur ferner Kugelsockel umfasst, die gleitend im ersten Aufnahmehohlraum und im zweiten Aufnahmehohlraum angeordnet sind, wobei der Kugelsockel mit einer Öffnung zum Einsetzen der mittleren Schiene versehen ist, eine Kante des Kugelsockels mit einer Vielzahl von Installationsnuten zum Installieren der Rollelemente entlang einer Verlaufsrichtung des Kugelsockels versehen ist und die Rollelemente drehbar in den Installationsnuten installiert sind.

3. Verbergbare dreiteilige Stahlkugelgleitschienenstruktur nach Anspruch 1, wobei das vordere Ende der oberen Schiene ferner mit einem Begrenzungselement versehen ist und eine obere Oberfläche des Begrenzungselements im Wesentlichen bündig mit der Montagefläche ist.

4. Verbergbare dreiteilige Stahlkugelgleitschienenstruktur nach Anspruch 3, wobei das Begrenzungselement eine Ablenkplatte umfasst, ein Klemmabschnitt, der an den ersten Aufnahmehohlraum angepasst ist, an einer hinteren Seite der Ablenkplatte vorgesehen ist und der Klemmabschnitt in den ersten Aufnahmehohlraum der oberen Schiene vom vorderen Ende der oberen Schiene eingesetzt ist, um eine Verbindung zwischen dem Begrenzungselement und der oberen Schiene zu realisieren.

5. Verbergbare dreiteilige Stahlkugelgleitschienenstruktur nach Anspruch 1, wobei eine Außenseite der unteren Schiene mit einem Verbindungselement in gebogener Form versehen ist, das Verbindungselement einen ersten Montageabschnitt und einen zweiten Montageabschnitt umfasst, die in der gebogenen Form angebunden sind; eine Seite des ersten Montageabschnitts mit der Außenseite der unteren Schiene verbunden ist und der zweite Montageabschnitt mit einer Vielzahl von Verbindungslöchern versehen ist.

6. Verbergbare dreiteilige Stahlkugelgleitschienenstruktur nach Anspruch 1, wobei ein erster Begrenzungsvorsprung und ein zweiter Begrenzungsvorsprung, die zum ersten Aufnahmehohlraum vorstehen, in Intervallen im ersten Aufnahmehohlraum der oberen Schiene vorgesehen sind und ein dritter Begrenzungsvorsprung und ein vierter Begrenzungsvorsprung, die zum zweiten Aufnahmehohlraum vorstehen, in Intervallen im zweiten Aufnahmehohlraum der unteren Schiene vorgesehen sind; eine Oberseite der mittleren Schiene in Intervallen mit einem fünften Begrenzungsvorsprung und einem sechsten Begrenzungsvorsprung versehen ist und ein Boden der mittleren Schiene in Intervallen mit einem siebenten Begrenzungsvorsprung und einem achten Begrenzungsvorsprung versehen ist; und der fünfte Begrenzungsvorsprung, der sechste Begrenzungsvorsprung, der siebente Begrenzungsvorsprung und der achte Begrenzungsvorsprung alle vom Gleithohlraum weg vorstehen und von der mittleren Schiene verlaufen.

7. Verbergbare dreiteilige Stahlkugelgleitschienenstruktur nach Anspruch 1, wobei die Rollelemente Stahlkugeln sind.

8. Schrank, wobei der Schrank umfasst:
eine oder mehrere verbergbare dreiteilige Stahlkugelgleitschienenstrukturen nach einem der Ansprüche 1 bis 7;
einen Schrankkörper, in dem die eine oder die mehreren verbergbaren dreiteiligen Stahlkugelgleitschienenstrukturen installiert sind;
eine oder mehrere Schubladen, die an der einen oder den mehreren verbergbaren dreiteiligen Stahlkugelgleitschienenstrukturen installiert sind, wobei die Schublade mit einer Öffnungsvertiefung zum Aufbewahren von Objekten versehen ist.

## Revendications

1. Structure de rails coulissants à trois sections escamotables à billes d'acier (3), dans laquelle la structure de rails coulissants à trois sections escamotables à billes d'acier (3) comprend un rail supérieur (4), un rail central (5), un rail inférieur (6) et des éléments de roulement (8) ; le rail supérieur (4) et le rail central (5) sont connectés à coulissement et des éléments de roulement (8) sont prévus entre le rail supérieur (4) et le rail central (5), et le rail central (5) et le rail inférieur (6) sont connectés à coulissement et des éléments de roulement (8) sont prévus entre le rail central (5) et le rail inférieur (6) ; le rail supérieur (4) est pourvu d'une première ouverture d'insertion, le rail inférieur (6) est pourvu d'une seconde ouverture d'insertion, et la première ouverture d'insertion et la seconde ouverture d'insertion sont agencées à l'opposé l'une de l'autre ; le rail central (5) comprend une première portion d'insertion, une portion de transition et une seconde portion d'insertion connectées dans l'ordre ; la première portion d'insertion est insérée dans la première ouverture d'insertion pour se connecter à coulissement au rail supérieur (4), la seconde portion d'insertion est insérée dans la seconde ouverture d'insertion pour se connecter à coulissement au rail inférieur (6) ; au moins trois groupes d'éléments de roulement (8) sont à chaque fois prévus entre la première portion d'insertion et le rail supérieur (4) et entre la seconde portion d'insertion et le rail inférieur (6), et les au moins trois groupes d'éléments de roulement (8) sont agencés en un triangle isocèle visualisé depuis une direction de section transversale du rail central (5) ; dans laquelle une surface supérieure du rail supérieur (4) est une surface de montage qui est une surface plate ; la première portion d'insertion et la seconde portion d'insertion ont la même structure et comprennent chacune une première plaque de positionnement (51), une deuxième plaque de positionnement (52) et une troisième plaque de positionnement (53) qui sont connectées dans l'ordre ; et la deuxième plaque de position (52) est essentiellement parallèle à la surface de montage ; le rail central (5) comprend une cavité coulissante (55) ; la première plaque de positionnement (51) et la troisième plaque de positionnement (53) sont toutes deux inclinées vers la cavité coulissante (55) ; la première plaque de positionnement (51), la deuxième plaque de positionnement (52) et la troisième plaque de positionnement (53) définissent une première rainure de montage pour monter les éléments de roulement (8), une deuxième rainure de montage pour monter les éléments de roulement (8) est définie sur un côté externe de la première plaque de positionnement (51), et une troisième rainure de montage pour monter les éléments de roulement (8) est définie sur un côté externe de la troisième plaque de positionnement (53) ; une première cavité d'hébergement est définie dans le rail supérieur (4), une seconde cavité d'hébergement est définie dans le rail inférieur (6), et la première cavité d'hébergement et la seconde cavité d'hébergement ont chacune une quatrième rainure de montage, une cinquième rainure de montage et une sixième rainure de montage qui sont respectivement en correspondance avec la première rainure de montage, la deuxième rainure de montage et la troisième rainure de montage ; le rail supérieur (4) est pourvu d'un ensemble de positionnement qui comprend un premier élément de positionnement (9) situé à une extrémité avant du rail supérieur (4) et un second élément de positionnement (10) situé à une extrémité arrière du rail supérieur (4) ; le premier élément de positionnement (9) comprend une première portion de connexion (91) connectée au rail supérieur (4) et essentiellement perpendiculaire à la surface de montage du rail supérieur (4) ; une extrémité de la première portion de connexion (91) est pourvue d'une deuxième portion de connexion (92) qui est essentiellement perpendiculaire à la première portion de connexion (91) et s'étend vers un côté interne du rail supérieur (4) ; une extrémité de la deuxième portion de connexion (92) est pourvue d'une première portion de positionnement d'insertion (93) qui s'étend perpendiculairement à la deuxième portion de connexion (92) ; et une extrémité supérieure de la première portion de positionnement d'insertion (93) est pourvue d'une première portion de positionnement (94) qui forme un premier angle α avec la première portion de positionnement d'insertion (93), où 90° < α < 180° ; et le second élément de positionnement (10) comprend une troisième portion de connexion (10b) essentiellement perpendiculaire à une extrémité supérieure du rail supérieur (4), une extrémité supérieure de la troisième portion de connexion (10b) est pourvue d'une seconde portion de positionnement d'insertion (10c) le long d'une direction de prolongement du rail supérieur (4) ; une extrémité de la seconde portion de positionnement d'insertion (10c) est pourvue d'une seconde portion de positionnement (10d) qui est disposée le long de la direction de prolongement du rail supérieur (4) ; et la seconde portion de positionnement (10d) et la seconde portion de positionnement d'insertion (10c) forment un second angle β, où 90° < β < 180°.

2. Structure de rails coulissants à trois sections escamotables à billes d'acier selon la revendication 1, la structure de rails coulissants à trois sections escamotables à billes d'acier comprend en outre des supports de billes disposés à coulissement dans la première cavité d'hébergement et la seconde cavité d'hébergement, le support de billes est pourvu d'une ouverture pour l'insertion du rail central, un bord du support de billes est pourvu d'une pluralité de rainures d'installation pour installer les éléments de roulement le long d'une direction de prolongement du support de billes, et les éléments de roulement sont installés à rotation dans les rainures d'installation.

3. Structure de rails coulissants à trois sections escamotables à billes d'acier selon la revendication 1, dans laquelle l'extrémité avant du rail supérieur est en outre pourvue d'un élément de limitation, et une surface supérieure de l'élément de limitation est essentiellement alignée avec la surface de montage.

4. Structure de rails coulissants à trois sections escamotables à billes d'acier selon la revendication 3, dans laquelle l'élément de limitation comprend un déflecteur, une portion de serrage adaptée à la première cavité d'hébergement est prévue sur un côté arrière du déflecteur, et la portion de serrage est insérée dans la première cavité d'hébergement du rail supérieur depuis l'extrémité avant du rail supérieur pour réaliser la connexion entre l'élément de limitation et le rail supérieur.

5. Structure de rails coulissants à trois sections escamotables à billes d'acier selon la revendication 1, dans laquelle un côté externe du rail inférieur est pourvu d'un élément de connexion en une forme coudée, l'élément de connexion comprend une première portion de montage et une seconde portion de montage connectée dans la forme coudée ; un côté de la première portion de montage est connecté au côté externe du rail inférieur, et la seconde portion de montage est pourvue d'une pluralité d'orifices de connexion.

6. Structure de rails coulissants à trois sections escamotables à billes d'acier selon la revendication 1, dans laquelle une première saillie de limitation et une deuxième saillie de limitation faisant saillie vers la première cavité d'hébergement sont prévues à des intervalles dans la première cavité d'hébergement du rail supérieur, et une troisième saillie de limitation et une quatrième saillie de limitation faisant saillie vers la seconde cavité d'hébergement sont prévues à des intervalles dans la seconde cavité d'hébergement du rail inférieur ; un haut du rail central est pourvu à des intervalles d'une cinquième saillie de limitation et d'une sixième saillie de limitation, et un bas du rail central est pourvu à des intervalles d'une septième saillie de limitation et d'une huitième saillie de limitation ; et la cinquième saillie de limitation, la sixième saillie de limitation, la septième saillie de limitation et la huitième saillie de limitation font toutes saillie à l'écart de la cavité coulissante et s'étendent depuis le rail central.

7. Structure de rails coulissants à trois sections escamotables à billes d'acier selon la revendication 1, dans laquelle les éléments de roulement sont des billes d'acier.

8. Meuble, dans lequel le meuble comprend :
une ou plusieurs structures de rails coulissants à trois sections escamotables à billes d'acier selon l'une quelconque des revendications 1 à 7 ;
un corps de meuble, installé avec la ou les structures de rails coulissants à trois sections escamotables à billes d'acier ;
un ou plusieurs tiroirs installés sur la ou les structures de rails coulissants à trois sections escamotables à billes d'acier, le tiroir étant pourvu d'une rainure d'ouverture pour stocker des articles.
